# EUROPÄISCHE PATENTSCHRIFT

(11) **EP 3 435 448 B1**
(45) Veröffentlichungstag und Bekanntmachung des Hinweises auf die Patenterteilung: **01.01.2020**
(21) Anmeldenummer: 18192385.5
(22) Anmeldetag: 26.09.2014
(51) Int. Cl.: H01M 4/133, H01M 4/136, H01M 4/58, H01M 4/587, H01M 4/62, H01M 4/66, H01M 4/80, H01M 4/04, H01M 4/02, H01M 4/1393, H01M 4/1397, H01M 10/0525, H01M 10/0563, H01M 10/054

(54) **WIEDERAUFLADBARE ELEKTROCHEMISCHE ZELLE**
RECHARGEABLE ELETROCHEMICAL CELL
ÉLÉMENT DE BATTERIE ÉLECTROCHIMIQUE RECHARGEABLE

(30) Priorität: 27.09.2013 DE 102013016560
(43) Veröffentlichungstag der Anmeldung: 30.01.2019
(62) Teilanmeldung aus: 14799956.9
(73) Patentinhaber: Innolith Assets AG, 4052 Basel (CH)
(72) Erfinder: Pszolla, Christian, 76185 Karlsruhe (DE); Zinck, Laurent, 67470 Mothern (FR); Borck, Markus, 70567 Stuttgart (DE); Wollfarth, Claudia, 76227 Karlsruhe (DE); Thümmel, Julia, 76131 Karlsruhe (DE); Biollaz, Heide, 79761 Waldshut (DE)
(74) Vertreter: Lemcke, Brommer & Partner Patentanwälte Partnerschaft mbB

(56) Entgegenhaltungen:
- WO-A1-2008/023348
- WO-A1-2008/058685
- WO-A2-2011/098233
- W. PORCHER ET AL: "Design of Aqueous Processed Thick LiFePO[sub 4] Composite Electrodes for High-Energy Lithium Battery", JOURNAL OF THE ELECTROCHEMICAL SOCIETY, Bd. 156, Nr. 3, 1. Januar 2009 (2009-01-01), Seite A133, XP055162075, ISSN: 0013-4651, DOI: 10.1149/1.3046129

## Beschreibung

Die Erfindung betrifft eine wiederaufladbare elektrochemische Batteriezelle mit einer positiven Elektrode, einer negativen Elektrode und einem Elektrolyten, der ein Leitsalz enthält.

Wiederaufladbare Batteriezellen sind auf vielen technischen Gebieten von großer Bedeutung. Vielfach werden sie für Anwendungen eingesetzt, bei denen nur relativ geringe Stromstärken benötigt werden, wie beispielsweise Mobiltelefone, Elektrowerkzeuge oder sonstige mobile Anwendungen. Daneben gibt es einen großen Bedarf von Batteriezellen für Hochstromanwendungen, wobei der elektrische Antrieb von Fahrzeugen, die Anwendung als Zwischenspeicher für dezentrale Energieerzeugung und die Nutzung als Großspeicher zur Netzstabilisierung (grid storage / grid tie application / smart grid) von besonderer Bedeutung sind.

Entwicklungsziele von wiederaufladbaren Batteriezellen sind insbesondere eine hohe Energiedichte (Energieinhalt je Gewichts- und Volumeneinheit), eine hohe Strombelastbarkeit (geringer Innenwiderstand), eine hohe Lebensdauer über viele Lade- und Entladezyklen, eine sehr gute Betriebssicherheit und möglichst geringe Kosten.

Wiederaufladbare Zellen sind in der Praxis zu großem Teil Lithiumionen-Zellen. Ihre negative Elektrode besteht aus auf Kupfer beschichtetem Kohlenstoff, in den beim Laden Lithiumionen eingelagert werden. Auch die positive Elektrode besteht aus einem Insertionsmaterial, das zur Aufnahme von Ionen des aktiven Metalls geeignet ist. In der Regel basiert die positive Elektrode auf Lithiumkobaltoxid, das auf ein Ableitelement aus Aluminium beschichtet ist. Beide Elektroden sind sehr dünn (Dicke in der Regel kleiner als 100 µm). Um die Elektroden mechanisch zu stabilisieren werden zusätzlich zum Aktivmaterial Binder eingesetzt. Beim Laden werden die Ionen des aktiven Metalls aus der positiven Elektrode ausgelagert und in die negative Elektrode eingelagert. Beim Entladen läuft der umgekehrte Prozess ab. Der Transport der Ionen zwischen den Elektroden erfolgt mittels des Elektrolyts, der die erforderliche lonenbeweglichkeit gewährleistet. Lithiumionen-Zellen enthalten einen Elektrolyt, der aus einem in einem organischen Lösungsmittel oder Lösungsmittelgemisch (z.B. auf Basis von Ethylencarbonat) gelösten Lithiumsalz (z.B. LiPF₆) besteht. Sie werden nachfolgend auch als "organische Lithiumionen-Zellen" bezeichnet.

Problematisch sind organische Lithiumionen-Zellen hinsichtlich der Sicherheit. Sicherheitsrisiken werden insbesondere durch den organischen Elektrolyt verursacht. Bei Fehlfunktionen kann die Brennbarkeit des Elektrolyten zu einem Brand - im schlimmsten Fall zu einer Explosion - einer Lithiumionen-Zelle führen. Um solche Risiken zu vermeiden, müssen zusätzliche Maßnahmen getroffen werden, insbesondere hinsichtlich einer sehr exakten Regelung der Lade- und Entladevorgänge und hinsichtlich zusätzlicher Sicherheitsmaßnahmen in der Batteriekonstruktion. Beispielsweise enthält die Zelle Komponenten, die im Fehlerfall schmelzen und damit den Stromfluss in der Zelle unterbinden. Diese Maßnahmen führen jedoch zu erhöhten Kosten und erhöhen Volumen und Gewicht, vermindern also die Energiedichte. Zudem sind diese Maßnahmen nicht immer ausreichend und es kann zu Fehlfunktionen mit der oben beschriebenen Auswirkung kommen.

Die Probleme sind besonders schwerwiegend, wenn Batteriezellen für große Energiespeicher, wie sie besonders für die neu entstehenden Märkte benötigt werden, entwickelt werden sollen. Die Anforderungen an die Stabilität und langfristige Betriebssicherheit sind dabei besonders hoch.

Es besteht ein hohes Bedürfnis nach verbesserten wiederaufladbaren Batteriezellen, die insbesondere folgende Anforderungen erfüllen:
- Sehr gute elektrische Leistungsdaten, insbesondere hohe Energiedichte bei gleichzeitig hohen entnehmbaren Strömen (Leistungsdichte).
- Sicherheit, auch unter den erschwerten Betriebsbedingungen, wie zum Beispiel bei Anwendungen im Bereich der Elektrotraktion, als Zwischenspeicher für dezentrale Energieerzeugung und Nutzung oder als Großspeicher zur Netzstabilisierung (grid storage / grid tie application / smart grid).
- Hohe Lebensdauer, insbesondere hohe Zahl nutzbarer Lade- und Entladezyklen.
- Die Verwendung von kostengünstigen Materialien.
- Kosteneffiziente und stabile Produktionsverfahren.
- Weitere für die Praxis wichtige Anforderungen wie Überladefähigkeit und Tiefentladefähigkeit.

In der WO 2011/098233 A2 (=D1) ist eine Batteriezelle beschrieben, die diese teilweise widersprüchlichen Anforderungen wesentlich besser als bisher erfüllt. Sie zeichnet sich durch folgende Besonderheiten aus, die auch bei der Batteriezelle der vorliegenden Erfindung vorzugsweise realisiert sind:
a) Der Elektrolyt enthält SO₂. Bevorzugt handelt es sich um einen auf SO₂ basierenden Elektrolyt (SO₂ based electrolyte). Mit diesem Begriff wird im Rahmen der Erfindung ein Elektrolyt bezeichnet, der SO₂ nicht nur als Zusatz in geringer Konzentration enthält, sondern bei dem die Konzentration des SO₂ so hoch ist, dass die Beweglichkeit der Ionen des Leitsalzes, das in dem Elektrolyt enthalten ist und den Ladungstransport bewirkt, zumindest teilweise durch das SO₂ gewährleistet ist. Vorzugsweise ist der Elektrolyt im Wesentlichen frei von organischen Materialien, wobei "im Wesentlichen" dahingehend zu verstehen ist, dass die Menge eventuell vorhandener organischer Materialien so gering ist, dass sie kein Sicherheitsrisiko darstellen.
b) Die positive Elektrode enthält ein aktives Material der Zusammensetzung

   LiₓM'_{y}M"_{z}(XO₄)ₐF_{b},

   wobei
   M' mindestens ein Metall, ausgewählt aus der Gruppe bestehend aus den Elementen Ti, V, Cr, Mn, Fe, Co, Ni, Cu und Zn ist,
   M" mindestens ein Metall, ausgewählt aus der Gruppe bestehend aus den Metallen der Gruppen 2, 3, 4, 5, 6, 8, 9, 10, 11, 12, 13, 14, 15 und 16 des Periodensystems, ist,
      X ausgewählt aus der Gruppe bestehend aus den Elementen P, Si und S ist,
      x größer 0 ist,
      y größer 0 ist,
      z größer oder gleich 0 ist,
      a größer 0 ist und
      b größer oder gleich 0 ist.

Darin ist X bevorzugt das Element P. Besonders bevorzugt ist M' das Metall Fe und besonders bevorzugt b gleich 0. Lithiumeisenphosphate sind besonders bevorzugte aktive Materialien der positiven Elektrode. Dazu gehören z. B. Verbindungen der folgenden Zusammensetzung: LiFePO₄, LiₓFe_{y}M_{z}PO₄, LiₓFe_{y}(SO₄)ₐ oder LiFeSO₄F, wobei die Subskripte x, y, z und a die oben genannte Werte haben.

Das aktive Material kann eine zusätzliche Dotierung enthalten, die nicht Bestandteil seiner Gitterstruktur ist.

Das bevorzugte Bindemittel in D1 ist THV, das in Aceton gelöst wird.

Im Artikel D2
W. Porcher et al., "Design of Aqueous Processed Thick LiFePO4 Composite Electrodes for High-Energy Lithium Battery, J. Electrochem. Soc., 2009, A133 - A144
wird die wässrige Herstellung von LiFePO₄-Elektroden beschrieben. Dabei wird die Verwendung von Polyvinylalkohol (PVA) und PEG als Bindemittel offenbart.

Die Anmeldung WO 2008/058685 A1 (=D3) offenbart eine wiederaufladbare Lithiumbatteriezelle, die LiAlCl₄ und SO₂ enthält. Das bevorzugte Bindemittel ist PTFE, das in Isopropanol gelöst wird.

Die Anmeldung US 2003/157409 A1 (=D4) beschreibt eine Polymer Lithium-Ionen-Batterie. Das Polymer Separator-Elektrolyt System enthält LiAlCl₄^{∗}6 SO₂ in Polydimethylsiloxane. Die Elektrode besteht neben dem Bindemittel aus Graphit (Anode) oder Li-Ni_{0.8}Co_{0.17}Al_{0.03}O₂ (Kathode) auf einem Nickelgitter.

Auf der Grundlage dieses Standes der Technik strebt die Erfindung an, eine Batteriezelle mit weiter verbesserter Funktion und Betriebssicherheit zur Verfügung zu stellen.

Dieses technische Problem wird durch eine wiederaufladbare elektrochemische Batteriezelle mit einem Gehäuse, einer positiven Elektrode, einer negativen Elektrode und einem Elektrolyt, der SO₂ und ein Leitsalz des aktiven Metalls der Zelle enthält, gelöst, welche dadurch gekennzeichnet ist, dass mindestens eine der Elektroden einen Binder B enthält, wobei Binder B aus einem Polymer besteht, das auf monomeren Styrol- und Butadien-Struktureinheiten basiert.

Eine erste Weiterbildung der erfindungsgemäßen Batteriezelle sieht vor, dass mindestens eine der Elektroden einen Binder A enthält, wobei Binder A aus einem Polymer besteht, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist.

Die Dokumente D1, D3 und D4 beschreiben ebenfalls Batteriezellen deren Elektrolyt SO₂ enthält. D4 beschreibt eine wässrige Herstellung von Lithiumeisenphosphat-Elektroden. D1 - D3 verwenden Bindemittel für die Elektroden, die keine Polymere aus monomeren Struktureinheiten einer konjugierten Carbonsäure sind. D4 beschreibt Polyacrylat als Polymermatrix für den Elektrolyten, nicht aber als Binder für eine Elektrode.

Die Lösung des oben beschriebenen technischen Problems kann den Dokumenten D1 - D4, allein oder in Kombination betrachtet, nicht entnommen werden.

Beispiele für Binder A sind Lithium Polyacrylat (LiPAA) oder Polyacrylsäure. Beispiele für Binder B, der auf monomeren Styrol- und Butadien-Struktureinheiten basiert, sind beispielsweise die Produkte TRD102A und TRD2001 der Fa. JSR Micro.
Unter einer Mischung aus Binder A und B versteht man eine Mischung der beschriebenen Polymere oder eine Mischung der monomeren Struktureinheiten der jeweiligen Binder. Eine Mischung der einzelnen monomeren Struktureinheiten ist zum Beispiel ein Polymer, das aus den monomeren Struktureinheiten Styrol, Butadien und Acrylsäure aufgebaut ist.

Durch die Kombination der erfindungsgemäßen Merkmale wird eine erhebliche Verbesserung der Funktion der Zellen erreicht. Insbesondere wurde im Rahmen der Erfindung festgestellt, dass die Menge an Lithiumionen, die während des ersten Ladezyklus zur Deckschichtbildung auf der negativen Elektrode irreversibel verbraucht werden, wesentlich verringert wird. Dadurch steht der Batteriezelle mehr zykelbare Kapazität für die Folgezyklen zur Verfügung.

Durch die höhere Startkapazität wird die Lebensdauer der Zelle verlängert. Zusätzlich wird die mechanische und chemische Stabilität der negativen und der positiven Elektrode durch den Einsatz der Binder A oder B oder einer Mischung aus A und B verbessert. Auch dieser führt zu einer verlängerten Lebensdauer der Batteriezelle.

Das Herstellungsverfahren der Elektroden und die Verarbeitung derselben im weiteren Produktionsprozess der Zellherstellung werden wesentlich vereinfacht. Da die Binder A und B wasserlöslich bzw. in Wasser dispergierbar sind, können alle Herstellungsschritte ohne den Einsatz von gesundheitsschädlichen, umweltbelastenden, leicht entzündlichen organischen Lösungsmittel durchgeführt werden. Auf besondere Sicherheitsmaßnahmen (Entlüftung, Sensorüberwachung, Explosionsschutz), abgeschlossene Produktionsanlagen oder aufwändige Lösungsmittelrückgewinnung kann somit verzichtet werden.

Bestandteil der Elektroden ist jeweils ein aktives Material, dessen Ladungszustand sich ändert, wenn beim Laden oder Entladen der Zelle Ionen des aktiven Metalls der Zelle, insbesondere Lithiumionen, in das aktive Material aufgenommen oder abgegeben werden. Dabei frei werdende oder aufgebrauchte Elektronen treten in ein elektronisch leitendes Ableitelement über, welches ebenfalls Bestandteil der Elektrode ist.

Wie bereits erwähnt, wird die vorliegende Erfindung bevorzugt bei einer wiederaufladbaren Lithiumionen-Batteriezelle gemäß der WO 2011/098233 A2 eingesetzt. Auf dieses Dokument wird vollinhaltlich Bezug genommen. Beispielsweise sind folgende Besonderheiten bei der vorliegenden Erfindung realisiert, die im Wesentlichen in dem genannten Dokument beschrieben sind, aus dem auch nähere Einzelheiten entnommen werden können:
- Die positive Elektrode ist ungewöhnlich dick, wobei Mindestwerte der Dicke von 0,25 mm, 0,3 mm, 0,4 mm, 0,5 mm, 0,6 mm, 0,8 mm und 1,0 mm in dieser Reihenfolge besonders bevorzugt sind. Bevorzugt beträgt die Dicke der positiven Elektrode maximal 2 mm, besonders bevorzugt maximal 1,5 mm.
- Die negative Elektrode enthält als aktives Material vorzugsweise Kohlenstoff zur Aufnahme von Lithiumionen. Auch sie ist bevorzugt ungewöhnlich dick, wobei Mindestwerte der Dicke von 0,2 mm, 0,3 mm, 0,4 mm, 0,5 mm, 0,6 mm und 0,8 mm in dieser Reihenfolge besonders bevorzugt sind. Bevorzugt beträgt die Dicke der negativen Elektrode maximal 1,5 mm, besonders bevorzugt maximal 1 mm.
- Die Elektroden weisen ein Ableitelement mit einer dreidimensionalen porösen Metallstruktur, insbesondere in Form eines Metallschaums auf. Dabei ist es besonders bevorzugt, wenn sich die poröse Metallstruktur im Wesentlichen über die gesamte Dicke der Elektrode erstreckt. Gemäß einer weiteren bevorzugten Ausführungsform ist das aktive Material der Elektrode in der dreidimensionalen porösen Metallstruktur, die deren Ableitelement bildet, im Wesentlichen gleichmäßig verteilt.
- Der Elektrolyt enthält eine im Vergleich zu der Menge des Leitsalzes relativ hohe Konzentration an SO₂, wobei Mindestwerte von 1,5 Mol, 2,0 Mol SO₂, 2,5 Mol SO₂, 3,0 Mol SO₂, 4,0 Mol SO₂, 4,5 Mol SO₂, 5,0 Mol SO₂ und 6,0 Mol SO₂ je Mol Leitsalz in dieser Reihenfolge besonders bevorzugt sind. Bevorzugt beträgt die Konzentration maximal 22 Mol SO₂ je Mol Leitsalz.
- Der Elektrolyt enthält als Leitsalz ein Halogenid, Oxalat, Borat, Phosphat, Arsenat oder Gallat des aktiven Metalls, vorzugsweise ein Lithiumtetrahalogenoaluminat, besonders bevorzugt ein Lithiumtetrachloroaluminat.

Der erfindungsgemäßen Problemlösung standen eine Reihe schwieriger Probleme entgegen, die mit der Verwendung eines anorganischen, vorzugsweise auf SO₂ basierenden, Elektrolyten und mit dem Einsatz von sehr dicken Elektroden mit einer dreidimensionalen Metallstruktur als Ableitelement zusammenhängen und bei konventionellen Zellen mit einem organischen Elektrolyt und dünnen Schichtelektroden nicht gegeben sind.
- Die Elektroden weisen ein Ableitelement mit einer dreidimensionalen porösen Metallstruktur, insbesondere in Form eines Metallschaums, auf. Um das aktive Material zusammen mit dem Binder möglichst gleichmäßig in der dreidimensionalen porösen Metallstruktur zu verteilen, muss sich zusammen mit einem Lösemittel eine homogene Mischung der Komponenten herstellen lassen. Diese Mischung muss sich leicht in die Metallstruktur einarbeiten lassen. Sind diese Bedingungen nicht gegeben so entstehen erhebliche Probleme bei der Herstellung einer dicken Elektrode.
- Binder, wie z.B. fluorierte Bindemittel, lösen sich oft nur in leichtentzündlichen, umweltbelastenden, organischen Lösungsmitteln. Zur Herstellung von binderhaltigen Elektroden müssen aufwändige Apparaturen verwendet werden, die dem Einsatz dieser Lösungsmittel Rechnung tragen. Problematisch sind hierbei insbesondere Explosionsschutz, Umweltschutz und Schutz der exponierten Mitarbeiter.
- Die gute elektrische Anbindung des Aktivmaterials an die dreidimensionale poröse Metallstruktur darf durch den Binder nicht beeinträchtigt werden.
- Der optimale Anteil an Binder ist schwierig zu ermitteln:
   Ein zu niedriger Binderanteil in den Elektroden führt zu einer schlechten Handhabung der hergestellten Elektroden, da die binderfreien Elektroden keine Adhäsion zum Ableitelement besitzen. Bei unsachgemäßer Handhabung und bei ungünstigen Umgebungsbedingungen kann es zur Partikelfreisetzung des aktiven Materials kommen. Dies kann zu Unbrauchbarkeit des Produktes, zur Verschmutzung des Arbeitsbereichs, sowie zur Gefährdung von Mitarbeitern durch unkontrollierte Aufnahme von Kleinstpartikeln kommen. Ein zu hoher Anteil an Binder wirkt sich auf die Energiedichte der Batteriezelle negativ aus. Durch das Gewicht des Binders wird die Energiedichte erniedrigt.
- Der Elektrolyt ist sehr aggressiv. Der Binder muss gegenüber dem SO₂-haltigen Elektrolyt stabil sein. Dadurch ist die Auswahl geeigneter Materialien sehr beschränkt.
- Der Binder muss über einen langen Zeitraum seine Stabilität beibehalten, auch wenn im Laufe der Lade- und Entladezyklen bei ev. Fehlfunktionen das aktive Metall, im Falle einer Lithium-Zelle also Lithium, metallisch abgeschieden wird und mit dem Binder in Berührung kommt. Reagiert der Binder mit dem Metall, so ist eine Destabilisierung der mechanischen Struktur der Elektrode die Folge. Die Zelle wird unbrauchbar.
- Die Bildung von Deckschichten auf der negativen Elektrode in Elektrolyten die SO₂ enthalten im ersten Ladezyklus wird durch den Einsatz von Bindern, wie z.B. von fluorierten Bindemitteln, insbesondere THV (Terpolymer aus Tetrafluorethylen, Hexafluorpropylen und Vinylidenfluorid) und PVDF (Polyvinylidenfluorid), oft erhöht. Die im Folgenden verwendbare Kapazität wird dadurch verringert.
- Binder in der Elektrode führen oft zu einer schlechten Benetzbarkeit der Elektrodenoberfläche mit SO₂-haltiger Elektrolytlösung. Dadurch entstehen hohe Widerstände innerhalb der Zelle. Probleme beim Betrieb der Zelle sind die Folge.
- Durch die Verwendung von Binder steigt der Innenwiderstand Ri an, weil die elektronische Anbindung des aktiven Materials an die dreidimensionale Metallstruktur verringert wird, so dass ein Kompromiss zwischen der mechanischen Stabilisierung und Erhöhung des Widerstandes gefunden werden muss.

Im Rahmen der Erfindung wurde festgestellt, dass trotz dieser Bedenken überraschenderweise der Einsatz eines Binders A oder B oder einer Mischung aus A und B, in den Elektroden, insbesondere der negativen Elektroden nicht nur möglich, sondern auch besonders vorteilhaft ist. Die Vorteile der erfindungsgemäßen Batteriezelle, die diese Elektroden enthält, sind insbesondere die erhöhte Startkapazität und die chemische und mechanische Stabilisierung der Elektroden, wie oben dargelegt. Zusätzlich wurde die Herstellung vereinfacht.

Weitere Vorteile werden unter Berücksichtigung der nachfolgend erläuterten bevorzugten Ausgestaltungen erreicht.

Die Erfindung wird nachfolgend anhand der Figuren näher erläutert. Die dargestellten und beschriebenen Besonderheiten können einzeln oder in Kombination verwendet werden, um bevorzugte Ausgestaltungen der Erfindung zu schaffen. Es zeigen:
- Figur 1: eine Querschnittsdarstellung einer erfindungsgemäßen Batteriezelle;
- Figur 2: eine perspektivische Darstellung einer Elektrode mit schematischen Ausschnittsvergrößerungen zur Erläuterung von deren inneren Struktur;
- Figur 3: die Abhängigkeit der elektrischen Spannung von der Ladekapazität für vier negative Elektroden mit unterschiedlichem Bindermaterial und für eine binderfreie Elektrode;
- Figur 4: die Abhängigkeit der elektrischen Spannung von der Ladekapazität für drei unterschiedliche negative Elektroden;
- Figur 5: die Abhängigkeit der elektrischen Spannung von der Ladekapazität für fünf negative Elektroden mit unterschiedlichem Anteil an LiPAA-Binder;
- Figur 6: der Vergleich der absoluten entladbaren Kapazität von Zellen mit thermisch vorbehandelter negativer Elektrode und mit einer negativen Elektrode, die mit einem erfindungsgemäßen Binder hergestellt worden ist.

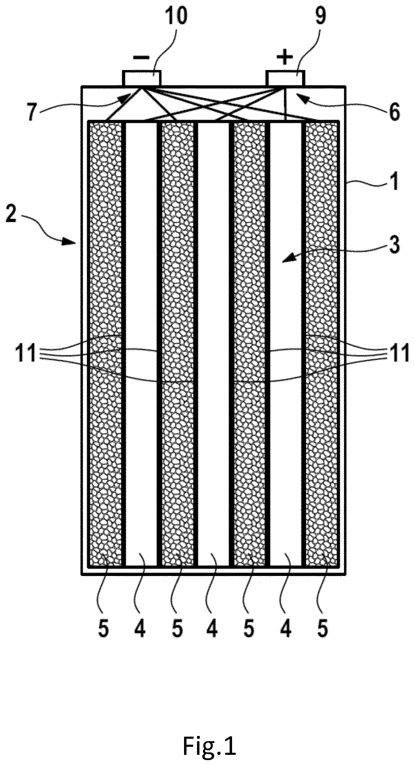

Das Gehäuse 1 der in Figur 1 dargestellten wiederaufladbaren Batteriezelle 2 umschließt eine Elektrodenanordnung 3, die mehrere (im dargestellten Fall drei) positive Elektroden 4 und mehrere (im dargestellten Fall vier) negative Elektroden 5 einschließt. Die Elektroden 4, 5 sind, wie üblich, über Elektrodenanschlüsse 6, 7 mit entsprechenden Anschlusskontakten 9, 10 der Batterie verbunden. Die Zelle ist derartig mit einem SO₂-haltigem in den Figuren nicht dargestellten Elektrolyt gefüllt, dass er möglichst vollständig in sämtliche Poren, insbesondere innerhalb der Elektroden 4, 5, eindringt.

Die Elektroden 4, 5 sind in üblicher Weise flächig ausgebildet, d.h. als Schichten mit einem im Verhältnis zu ihrer Flächenausdehnung geringen Dicke. Sie sind jeweils durch Separatoren 11 voneinander getrennt. Das Gehäuse 1 der dargestellten prismatischen Zelle ist im Wesentlichen quaderförmig, wobei sich die Elektroden und die im Querschnitt der Figur 1 dargestellten Wände senkrecht zu der Zeichenebene erstrecken und im Wesentlichen gerade und eben verlaufen. Die erfindungsgemäße Zelle kann jedoch auch als Wickelzelle ausgebildet sein.

Die Elektroden 4, 5 weisen, wie üblich, ein Ableitelement auf, das aus Metall besteht und dazu dient, den erforderlichen elektronisch leitenden Anschluss des aktiven Materials der jeweiligen Elektrode zu ermöglichen. Das Ableitelement steht in Kontakt zu dem an der Elektrodenreaktion der jeweiligen Elektrode beteiligten aktiven Material. Vorzugsweise ist das Ableitelement der positiven Elektrode, besonders bevorzugt auch das Ableitelement der negativen Elektrode, in Form einer dreidimensionalen porösen Metallstruktur, insbesondere in Form eines Metallschaums, ausgebildet. Der Begriff "dreidimensionale poröse Metallstruktur" bezeichnet dabei jede aus Metall bestehende Struktur, die sich nicht nur, wie ein dünnes Blech, über Länge und Breite der flächigen Elektrode erstreckt, sondern auch über deren Dickendimension, wobei sie derartig porös ist, dass das aktive Material der Elektrode in die Poren eingearbeitet werden kann.

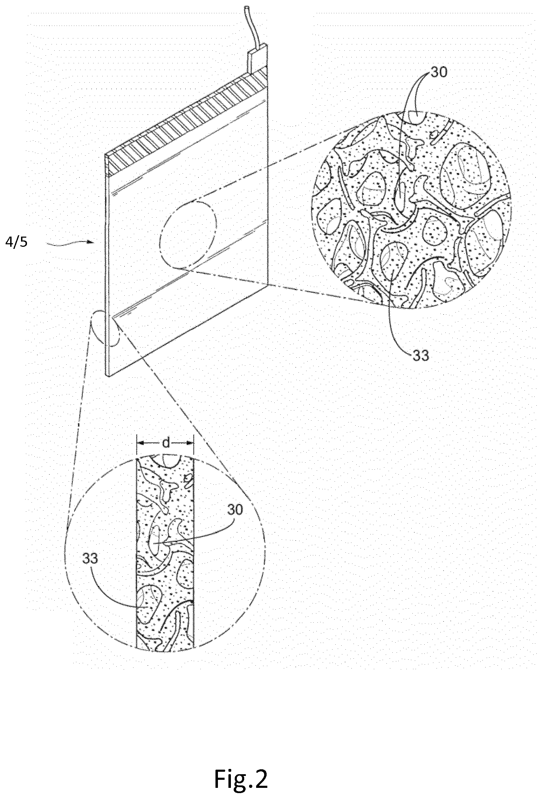

Figur 2 verdeutlicht durch zwei schematische Ausschnittsvergrößerungen die innere Struktur einer bevorzugten Elektrode. Sie weist ein Ableitelement 30 mit einer dreidimensionalen porösen Metallstruktur auf. Bevorzugt wird das Ableitelement von einem Metallschaum gebildet, wobei es insbesondere vorteilhaft ist, wenn sich die poröse Metallstruktur im Wesentlichen über die gesamte Dicke d der Elektrode erstreckt. Das aktive Material 33 der Elektrode, für eine positive Elektrode beispielsweise Lithiumeisenphosphat, befindet sich in den Poren der porösen Metallstruktur und ist vorzugsweise homogen darin verteilt. Nähere Einzelheiten sind der erwähnten WO 2011/098233 A2 zu entnehmen. Im Rahmen der Erfindung wurde festgestellt, dass besonders vorteilhafte Ergebnisse mit der Kombination der dort beschriebenen Elektrodentypen und einem Binder A oder B oder einer Mischung aus A und B, wie hier beschrieben, erreicht werden.

Bei der Herstellung der Elektrode wird das aktive Material zusammen mit dem Binder A oder B oder einer Mischung aus A und B , derartig in die poröse Struktur des Ableitelementes eingearbeitet, dass es dessen Poren über die gesamte Dicke der Metallstruktur gleichmäßig füllt. Danach wird das Material unter hohem Druck gepresst, wobei die Dicke nach dem Pressvorgang vorzugsweise maximal 80 %, weiter bevorzugt maximal 60 % besonders bevorzugt maximal 40 %, der Ausgangsdicke beträgt.

Die dreidimensionale poröse Metallstruktur 30 des Ableitelementes erstreckt sich im Wesentlichen über die gesamte Dicke d des Ableitelementes und das aktive Material zusammen mit dem Binder A oder B oder einer Mischung aus A und B sind darin im Wesentlichen homogen verteilt. "Im Wesentlichen" ist hinsichtlich beider genannter Bedingungen dahingehend zu verstehen, dass die Zellfunktion durch eventuelle Abweichungen nur geringfügig beeinträchtigt wird. Jedenfalls sollte sich die poröse Metallstruktur über mindestens 70 %, vorzugsweise mindestens etwa 80 %, der Dicke der Elektrode erstrecken.

Eine bevorzugte Ausführungsform der erfindungsgemäßen Batteriezelle besitzt positive und negative Elektroden, bei denen mindestens entweder die positiven oder die negativen Elektroden nur Binder B enthalten.

Eine weitere bevorzugte Ausführungsform der erfindungsgemäßen Batteriezelle besitzt positive und negative Elektroden, bei denen mindestens eine der Elektroden einen Binder A enthält, der aus einem Polymer besteht, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist.

Eine weitere bevorzugte Ausführungsform der erfindungsgemäßen Batteriezelle besitzt positive und negative Elektroden, bei denen mindestens entweder die positiven oder die negativen Elektroden eine Mischung aus Binder A und B enthalten.

Eine weitere bevorzugte Ausführungsform der erfindungsgemäßen Batteriezelle besitzt positive und negative Elektroden, bei denen mindestens entweder die positiven oder die negativen Elektroden einen Binder enthalten, ausgewählt aus der Gruppe:
- Binder A, welcher aus einem Polymer besteht, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist,
- oder einer Mischung aus Binder A und B
- und die zusätzlich noch einen weiteren, von A und B unterschiedlichen, Binder enthalten.

Die in der WO 2011/098233 A2 beschriebenen Elektroden sind ungewöhnlich dick. Aufgrund der Dicke und zusätzlich aufgrund der Porenstruktur der für das Ableitelement verwendeten porösen Metallstruktur waren zusätzliche Probleme in Kombination mit einem Binder A oder B oder einer Mischung aus A und B, zu erwarten.

Um einen hohen Feststoffanteil in der Elektrode zu erhalten, muss die zur Herstellung verwendete Paste aus aktivem Material, Binder, eventuell noch anderen Komponenten und Lösungsmittel optimale Eigenschaften besitzen. Denn nur dann können die Poren der für das Ableitelement verwendeten porösen Metallstruktur nahezu vollständig mit Feststoff gefüllt und eine Elektrode mit hoher Kapazität hergestellt werden.

Die mechanische und chemische Stabilität der negativen und der positiven Elektrode ist ein wichtiges Kriterium für die Qualität einer wiederaufladbaren Batteriezelle. Diese Stabilität kann durch den Einsatz eines Binders in den Elektroden erreicht werden. Folgende Vorrausetzungen muss ein Binder für eine Elektrode erfüllen:
- Einfache Verarbeitung bei der Herstellung der Elektrode:
   ∘ homogene Vermischung mit den anderen Elektrodenbestandteilen wie z.B. des aktiven Materials, um eine Elektrode mit ausreichender Flächenkapazität zu erhalten.
   ∘ gute Löslichkeit im Lösungsmittel, welches aufgrund der einfachen Handhabung bevorzugt Wasser sein sollte
   ∘ geeigneter Schmelzbereich, um während der weiteren Prozessierung weder zu zerfließen (z.B. Stabilität bei der thermischen Trocknung der Zelle), noch zu stabil zu sein (z.B. Prozesstemperatur bei der Binderaktivierung).
   ∘ Bei thermischer Belastung kein Freisetzen von schädlichen (z.B. fluorhaltigen) Gasen.
   ∘ Möglichst große Lagerstabilität (z.B. Lagerungstemperatur und Lagerungsdauer).
- Gute Eigenschaften beim Betrieb der Batteriezelle
   ∘ Keine Zerstörung des Binders durch die Elektrolytlösung. Chemische Kompatibilität mit allen Zellkomponenten.
   ∘ Förderung einer geringen Deckschichtbildung auf den Elektroden, besonders der negativen Elektrode
   ∘ Mechanische Stabilisierung der Elektrode über einen langen Zeitraum, bzw. während vieler Lade- und Entladezyklen. Dies dient vor allem dazu, um die bei der Interkalation und Deinterkalation auftretende Volumenänderung zu kompensieren.
   ∘ Gute Benetzbarkeit der Elektrodenoberfläche mit Elektrolytlösung
   ∘ Thermische Stabilität innerhalb der Betriebstemperatur der Zelle

Da die erfindungsgemäße Zelle bevorzugt dreidimensionale Ableitelemente und eine SO₂- haltige Elektrolytlösung besitzt, ist die Auswahl eines Binders, der alle oben benannten Eigenschaften erfüllt, besonders schwierig.

### Beispiel 1

Im Stand der Technik, wie z.B. in der WO 2011/098233 A2 beschrieben, wurde die Befüllung der Metallstruktur der positiven Elektrode mit Hilfe von organischem Lösungsmittel und einem darin löslichen fluorhaltigem Binder erreicht. Die erreichten Kapazitäten lagen typischerweise bei ca. 15 mAh/cm² Elektrodenfläche.

Im Rahmen der Erfindung wurden versucht, die Herstellung der positiven Elektroden durch den Ersatz des organischen Lösungsmittels durch Wasser zu vereinfachen. Dazu wurde der fluorhaltige Binder in Wasser dispergiert. Es wurde festgestellt, dass sich die erreichten Kapazitäten um ca. 7% auf nur noch ca. 14 mAh/cm² Elektrodenfläche verringert hatten.

Überraschender Weise konnte mit einem der erfindungsgemäßen Binder A oder B oder einer Mischung aus A und B und Wasser als Lösungsmittel die Befüllung der Metallstruktur derart optimiert werden, dass ein ähnlich hoher Befüllgrad an aktivem Material erreicht wird, wie zuvor nur mit dem Einsatz von organischen Lösungsmitteln.

Für eine bevorzuge Ausführungsform der erfindungsgemäßen Batteriezelle wurden positive Elektroden beispielsweise aus folgenden Komponenten hergestellt:
94 Gew% Lithiumeisenphosphat (aktives Material der positiven Elektrode)
2 Gew% Carbonblack (Leitfähigkeitsvermittler)
4 Gew% Binder A

Aus diesen Komponenten wurde eine Paste unter Rühren in Wasser hergestellt. Die fertige Paste wurde homogen in einen Metallschaum mit einer Ausgangsporosität von mehr als 90 % eingebracht und eine Stunde bei 50° C getrocknet. Dieser Schritt ist erforderlich um die Elektroden lösemittelfrei zu bringen. Nach dem Abkühlen wurde die Elektrode mittels eines Kalanders, ausgehend von einer Ausgangsdicke von 1,0 mm, auf eine Dicke von 0,56 mm verdichtet. Danach wurde sie einem weiteren Trocknungsschritt unter Vakuum bei 120°C unterzogen. Die erreichten Kapazitäten dieser positiven Elektroden liegen ebenfalls typischerweise bei 15 mAh/cm² Elektrodenfläche.

Bei der negativen Elektrode konnte durch eine Optimierung der Herstellparameter mit Wasser als Lösungsmittel ebenfalls ein ähnlicher Befüllgrad an aktivem Material erzielt werden, wie zuvor nur mit dem Einsatz von organischen Lösungsmitteln erreicht wurde.

Zu Herstellung einer bevorzugen Ausführungsform der erfindungsgemäßen Batteriezelle wurden für die negativen Elektroden beispielsweise folgende Komponenten eingesetzt:
96 Gew% Graphit (aktives Material der negativen Elektrode)
4 Gew% Binder A

Aus den Komponenten und dem Lösungsmittel Wasser wurde mittels Rühren eine Paste hergestellt. Die Paste wurde homogen in einen Metallschaum mit einer Ausgangsporosität von mehr als 90 % eingebracht und eine Stunde bei 50 °C getrocknet. Dieser Schritt ist erforderlich um die Elektroden lösemittelfrei zu bringen. Nach dem Abkühlen wurde die Elektrode mittels eines Kalanders, ausgehend von einer Ausgangsdicke von 1,0 mm, auf eine Dicke von 0,40 - 0,42 mm verdichtet. Danach wurde sie einem weiteren Trocknungsschritt unter Vakuum bei 120° C unterzogen.

Die erreichten Kapazitäten der erfindungsgemäß hergestellten negativen Elektroden liegen bei ca. 13 mAh/cm² Elektrodenfläche.

### Beispiel 2

Die in der WO 2011/098233 A2 beschriebene Batteriezelle enthält eine negative Elektrode, die frei von Binder ist. Dies ist der Tatsache geschuldet, dass viele gängige Bindermaterialien, die ausschließlich mit organischen, brennbaren Lösemitteln verwendet werden können, nicht stabil gegenüber der verwendeten anorganischen Elektrolytlösung sind. Das Fehlen eines Binders beeinträchtigt das Herstellungsverfahren der negativen Elektrode und führt zu komplexen Lösungen.

Ein weiterer Grund für den Verzicht auf Binder ist der, dass die Zugabe der dort beschriebenen fluorhaltigen Binder zu einem deutlichen Anstieg der Menge an Lithiumionen führt, die während des ersten Ladezyklus zur Deckschichtbildung auf der negativen Elektrode irreversibel verbraucht werden.

Die Auswirkung von verschiedenen Bindern auf die irreversibel verbrauchte Kapazität durch die Deckschichtbildung auf der negativen Elektrode im ersten Zyklus wurde untersucht. Dazu wurden verschiedene negative Elektroden mit Graphit als aktivem Material, dem entsprechenden Binder und einem dreidimensionalen Metallableiter, wie in Versuch 1 beschrieben, hergestellt. Auf dem gleichen Weg wurde auch eine binderfreie Referenzelektrode hergestellt. Der Gew%-Satz an Binder wurde an die unterschiedlichen Bindeeigenschaften der jeweiligen Binder angepasst.

Dabei ist zu beachten, dass sich ein hoher Anteil des Binders nachteilig auf die Energiedichte, also auf die elektrische Energie je Gewichts- und Volumeneinheit, der Batteriezelle auswirkt.

Zusätzlich wurde auf dem gleichen Weg auch eine binderfreie Referenzelektrode hergestellt. Es entstanden auf diese Art und Weise fünf verschiedene Sets an Experimentalelektroden. Tabelle 1 beschreibt die verwendeten Binder:

**Tabelle 1: Vollständige Bezeichnung der in Beispiel 2 verwendeten Binder**

| **Elektroden** | **Elektroden mit Bindern aus dem Stand der Technik** | | **Binderfreie Elektrode** | **Elektroden mit erfindungsgemäßen Bindern** | |
|---|---|---|---|---|---|
| **Bezeichnung in** **Figur 3** | **A** | **B** | **C** | **D** | **E** |
| **Gew% an Binder** | **0,1** | **1** | **0** | **2** | **4** |
| **Lösungsmittel bei der Herstellung** | **Aceton** | **Isopropanol** | **Isopropanol** | **Wasser** | **Wasser** |
| **Polymersorte** | **THV** Terpolymer aus Tetrafluorethylen, Hexafluorpropylen und Vinylidenfluorid | **PTFE** Polytetrafluorethylen | **,-** | **SBR** Styrol-Butadien | **LiPAA** Li-Polyacrylat |
| **Chemischer Aufbau** | (-CF₂-CF₂-CF₂-C₂F₄- CH₂-CF₂-)ₙ | (-CF₂-CF₂-)ₙ | **,-** | [-CH₂-CH=CH-CH₂-]ₘ[-CHPh-CH₂-]ₙ | [-CH₂-CH(COOX)-]ₙ |

Die fünf Experimentalelektroden wurden mittels einer Drei-Elektroden-Anordnung untersucht, wobei beim Laden der Elektrode der Verlauf der Spannung U in Volt gegen Lithium aufgetragen wurde über den Ladezustand Q bezogen auf die Nennkapazität Q_{N} der Elektrode. Die Messungen wurden in einer Elektrolytlösung der Zusammensetzung LiAlCl₄ x 1,5 SO₂ durchgeführt.

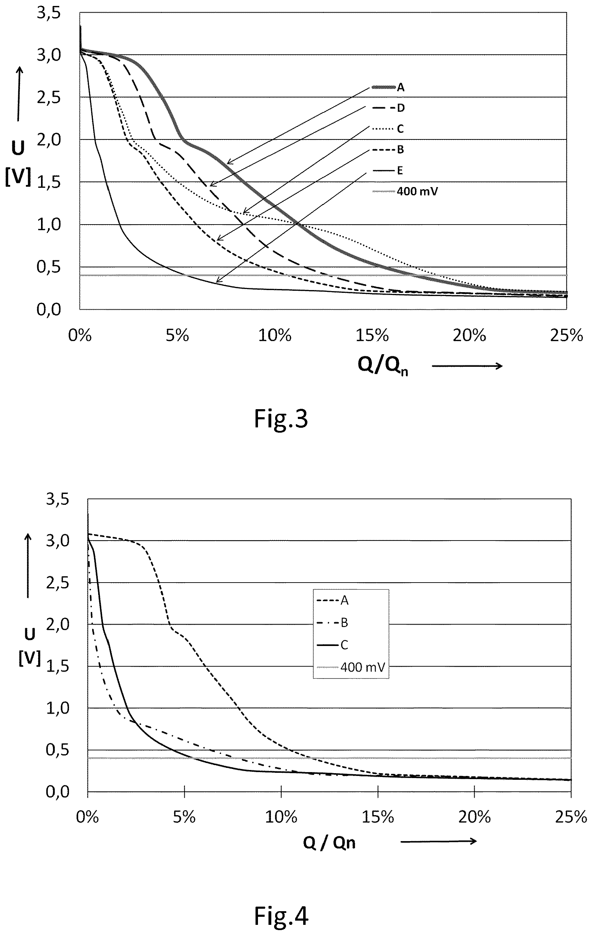

Die fünf dargestellten Kurven zeigen die Ergebnisse jeweils mehrerer Experimente mit den vorstehend beschriebenen Elektroden. In Figur 3 entspricht die Abszisse des Schnittpunktes der Kurve mit der 400mV Linie der durch Deckschichtbildung aufgebrauchten Zellkapazität. Es ist zu sehen, dass der Kapazitätsverlust bei der Elektrode mit den fluorhaltigen Bindern THV und PTFE am größten ist, gefolgt von der Referenzelektrode, die keinen Binder enthält.

Die Kurve der Elektrode mit dem erfindungsgemäßen SBR als Binder zeigt ein deutlich besseres Verhalten als die vorhergehenden Elektroden.

Den geringsten Kapazitätsverlust von nur 6 % hat eine erfindungsgemäße Elektrode mit LiPAA-Binder.

Deutlich erkennbar ist, dass die Deckschichtkapazität auch bei der Elektrode ohne Binder sehr hoch liegt.

Tabelle 2 fasst die Ergebnisse zusammen:

**Tabelle 2: Durch Deckschichtbildung aufgebrauchte Zellkapazität für Elektroden mit verschiedenen Bindern.**

| **Elektroden** | **Elektroden mit Bindern aus dem Stand der Technik** | | **Binderfreie Elekt rode** | **Elektroden mit erfindungsgemä ßen Bindern** | |
|---|---|---|---|---|---|
| **Bezeichnung in** **Figur 3** | **A** | **B** | **C** | **D** | **E** |
| **Polymersorte** | **THV** | **PTFE** | **-** | **SBR** | **LiPAA** |
| **durch Deck schicht bildung auf gebrauchte Zellkapazität** | **17 %** | **18 %** | **14 %** | **11 %** | **6 %** |

### Beispiel 3

Um die sehr hohe Deckschichtkapazität einer binderfreien Elektrode zu verringern schlägt WO 2011/098233 A2 sehr aufwändige Maßnahmen vor, so z.B. die Temperaturbehandlung der Elektrode bei mind. 900 °C für mind. 10 h oder die Beschichtung der Elektrodenoberfläche. Beide Maßnahmen verlangen nach der Fertigung der Elektrode, z.B. wie in Beispiel 1 beschrieben, noch zusätzliche sehr zeit- und kostenintensive Produktionsschritte.

Erfindungsgemäße Elektroden können nach der Fertigung gemäß Beispiel 1 sofort in einer erfindungsgemäßen Batteriezelle eingesetzt werden.

Die Versuchsdurchführung erfolgte analog Beispiel 2. Auch in Figur 4 entspricht die Abszisse des Schnittpunktes der Kurve mit der 400mV Linie der durch Deckschichtbildung aufgebrauchten Zellkapazität. Folgende Elektroden wurden eingesetzt:

| | |
|---|---|
| A | Elektrode mit Temperaturbehandlung laut WO 2011/098233 A2 |
| B | Elektrode mit Beschichtung laut WO 2011/098233 A2 |
| C | Elektrode mit 4% LiPAA |

Deutlich zu erkennen ist, dass die beiden Elektroden A und B eine wesentlich höhere Deckschichtkapazität besitzen, als Elektrode C.

Tabelle 3 fasst die Ergebnisse zusammen:

**Tabelle 3: Durch Deckschichtbildung aufgebrauchte Zellkapazität für verschieden behandelte Elektroden.**

| **Elektroden** | **Elektrode mit Tempera turbehandlung** | **Elektrode mit Beschichtung** | **Elektrode mit 4% LiPAA** |
|---|---|---|---|
| **Bezeichnung in** **Figur 3** | **A** | **B** | **C** |
| **Durch Deckschicht bildung aufge brauchte Zellkapazi tät** | **12 %** | **8 %** | **6 %** |

Es ist deutlich zu sehen, dass die durch Deckschichtbildung aufgebrauchte Zellkapazität für Elektroden, die mit Verfahren laut WO 2011/098233 A2 erreicht werden, noch sehr hohe Werte hat.

Überraschender Weise zeigt eine erfindungsgemäße Elektrode, auch ohne aufwändige Nachbehandlung, schon hervorragende Werte.

### Beispiel 4

In Beispiel 4 wurde der Einfluss des Gehalts an Binder auf die durch Deckschichtbildung aufgebrauchte Zellkapazität untersucht.

Zum Vergleich der erfindungsgemäßen Elektroden mit dem Stand der Technik wurden negative Elektroden mit verschiedenen Gehalten an THV-Binder, laut dem in Beispiel 1 erläutertem Verfahren mit Aceton als Lösungsmittel, gefertigt.

Die Deckschicht wurde hier bestimmt, indem man 2x mit 1C geladen und 1C entladen hat. Die Differenz in der Zykeleffizienz während der ersten beiden Zyklen wurde als die durch Deckschichtbildung aufgebrauchte Zellkapazität in % der theoretischen Entladekapazität umgerechnet. Tabelle 4 zeigt die Ergebnisse:

**Tabelle 4: Durch Deckschichtbildung aufgebrauchte Zellkapazität für Elektroden mit verschiedenem Gehalt an THV-Binder.**

| | | | |
|---|---|---|---|
| **Gew% an THV-Binder** | **1** | **2** | **4** |
| **Durch Deckschichtbildung aufgebrauchte Zellkapazität in % der theoretischen Kapazität** | **24,1 %** | **26,4 %** | **33,5 %** |

Deutlich zu sehen ist, dass sich ein höherer Gehalt an Binder nachteilig auf die Elektrodeneigenschaften auswirkt. Während bei einem Bindergehalt von 1 Gew% THV die durch Deckschichtbildung aufgebrauchte Zellkapazität noch bei 24,1 % liegt, steigt sie um fast 10 % auf 33,5 % bei einem Bindergehalt von 4 %.

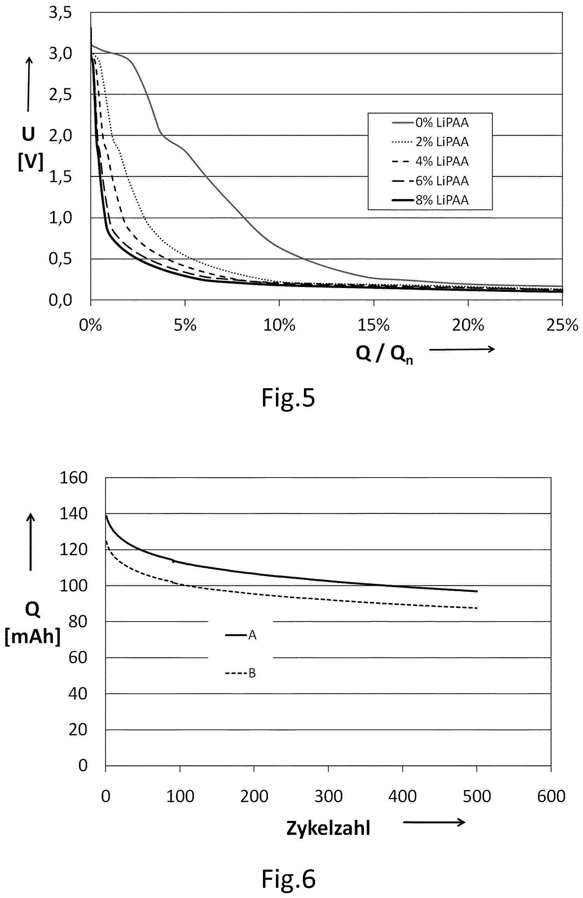

In Figur 5 sind erfindungsgemäße negative Elektroden mit verschiedenem Gehalt an LiPAA-Binder dargestellt. Die Deckschichtkapazität kann aus der Figur abgelesen werden.

Überraschenderweise werden hier bei höherem Bindergehalt bessere Ergebnisse erzielt. Das Verhalten von Elektroden mit erfindungsgemäßem Binder ist konträr zum Verhalten der Elektroden mit Binder THV-Binder.

Die besten Ergebnisse werden bei einem LiPAA-Gehalt von 8 Gew% erzielt. Aber auch die Elektrode mit einem LiPAA-Gehalt von 2 Gew% zeigt eine deutliche Verbesserung der Elektrode.

Allerdings weisen Elektroden mit hohem Gehalt an LiPAA eine niedrigere Energiedichte auf, da weniger Aktivmaterial in der Elektrode enthalten ist. Der Anteil an Binder darf die Verringerung der Deckschichtkapazität nicht übertreffen, sonst liegt keine Erhöhung der weiterhin verfügbaren Entladekapazität vor. Optimale Ergebnisse werden bei einem Bindergehalt von 4 Gew% erzielt.

### Beispiel 5

Für dieses Experiment wurden zwei prismatische Vollzellen mit zwei negativen und einer positiven Elektroden hergestellt. Die Elektroden wurden zusammen mit einem dazwischen angeordneten Separator gestapelt und in ein prismatisches Gehäuse eingebracht.

Beide Vollzellen enthielten positiven Elektroden, die nach dem Verfahren aus Beispiel 1, allerdings mit Aceton als Lösungsmittel, aus folgenden Komponenten hergestellt wurden:
94 Gew% Lithiumeisenphosphat
2 Gew% Carbonblack als Leitfähigkeitsvermittler
4 Gew% THV als Binder
Es wurden positive Elektroden mit einer Kapazität von 15 mAh/cm² Elektrodenfläche erhalten.

Vollzelle B enthielt binderfreie negative Elektroden, die mit einer Temperaturbehandlung laut WO 2011/098233 A2 versehen wurden.

Zu Herstellung von Vollzelle A wurden erfindungsgemäße negative Elektroden aus folgenden Komponenten laut dem Verfahren aus Beispiel 1 hergestellt:
96 Gew% Graphit (aktives Material der negativen Elektrode)
4 Gew% Binder A

Es wurden jeweils negative Elektroden mit einer Kapazität von 13 mAh/cm² Elektrodenfläche hergestellt.

Die Vollzellen wurden mit einer Elektrolytlösung der Zusammensetzung LiAlCl₄ x 6SO₂ befüllt.

Die Zelle wurde erstmals mit einer Laderate und Entladerat von ca. 0,05 C (entspricht 10 mA) langsam konditioniert. Dabei wird die Deckschicht gebildet und die durch die Deckschichtbildung aufgebrauchte Zellkapazität kann ermittelt werden.

Bei den nächsten 100 Zyklen wurden die Zellen mit einer Lade- und Entladerate von ca. 0,5 C (entspricht 100 mA) gezykelt. Nach 100 Zyklen wird die Lade- und Entladerate auf ca. 1 C (entspricht 200 mA) erhöht.

Die Ladung erfolgte in einem I/U Vorgang. Die Zelle wird mit einem konstanten Strom bis 3,6 V geladen. Ab einer Zellspannung von 3,6 V wird der Strom reduziert. Bei erstmaligem Unterschreiten eines Mindeststromes von 40 mA wird der Ladevorgang abgebrochen.

Die Entladung wurde mit einem konstanten Strom durchgeführt und bei einer Zellspannung von 2,5 V abgebrochen.

In Figur 6 ist die Entladekapazität über der Zykelzahl dargestellt. Die zwei dargestellten Kurven zeigen die Mittelwerte jeweils mehrerer Experimente mit den vorstehenden beschriebenen Elektroden. Es ist überraschend, dass trotz der Zugabe von 4 % Binders eine höhere Absolutkapazität erzielt werden kann.

Die Lebensdauer einer Zelle wird durch das Erreichen einer bestimmten Entladekapazität, z.B. 70 % der Nennkapazität, bestimmt. Durch die höhere Anfangskapazität ist die Lebensdauer der Zelle A wesentlich höher als die von Zelle B. Zelle A erreicht die Endkapazität später als Zelle B.

## Patentansprüche

1. Wiederaufladbare elektrochemische Batteriezelle mit einem Gehäuse, einer positiven Elektrode, einer negativen Elektrode und einem Elektrolyt, der SO₂ und ein Leitsalz des aktiven Metalls der Zelle enthält,
**dadurch gekennzeichnet,**
**dass** mindestens eine der Elektroden einen Binder B enthält, wobei Binder B aus einem Polymer besteht, das auf monomeren Styrol- und Butadien-Struktureinheiten basiert.

2. Batteriezelle nach Anspruch 1,
**dadurch gekennzeichnet,**
**dass** mindestens eine der Elektroden einen Binder A enthält, wobei Binder A aus einem Polymer besteht, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist.

3. Batteriezelle nach einem der vorhergehenden Ansprüche,
**dadurch gekennzeichnet,**
**dass** die den Binder B oder, bei Rückbezug auf Anspruch 2, den Binder A oder die Binder A und B enthaltende Elektrode die negative Elektrode der Zelle ist.

4. Batteriezelle nach einem der vorhergehenden Ansprüche,
**dadurch gekennzeichnet,**
**dass** mindestens eine der Elektroden den Binder B oder, bei Rückbezug auf Anspruch 2, den Binder A oder eine Mischung aus Binder A und Binder B vorzugsweise in einer Konzentration von höchstens 10 Gew%, weiter bevorzugt in einer Konzentration von höchstens 8 Gew%, weiter bevorzugt in einer Konzentration von höchstens 6 Gew%, noch besonders bevorzugt in einer Konzentration von höchstens 4 Gew% enthält.

5. Batteriezelle nach einem der vorhergehenden Ansprüche,
**dadurch gekennzeichnet,**
**dass** mindestens eine der Elektroden noch weitere, von Binder B und, bei Rückbezug auf Anspruch 2, von Binder A unterschiedliche Binder enthalten kann.

6. Batteriezelle nach einem der vorhergehenden Ansprüche,
**dadurch gekennzeichnet,**
**dass** mindestens eine der Elektroden ein Ableitelement mit einer dreidimensionalen porösen Metallstruktur, insbesondere in Form eines Metallschaums, aufweist.

7. Batteriezelle nach Anspruch 6,
**dadurch gekennzeichnet,**
**dass** sich die poröse Metallstruktur über die gesamte Dicke der Elektrode erstreckt.

8. Batteriezelle nach einem der Ansprüche 6 oder 7,
**dadurch gekennzeichnet,**
**dass** das aktive Material in der Metallstruktur homogen verteilt ist.

9. Batteriezelle nach einem der vorhergehenden Ansprüche,
**dadurch gekennzeichnet,**
**dass** die Dicke der positiven Elektrode mindestens 0,25 mm, bevorzugt mindestens 0,30 mm, weiter bevorzugt mindestens 0,40 mm, weiter bevorzugt mindestens 0,50 mm, weiter bevorzugt mindestens 0,60 mm und besonders bevorzugt mindestens 1,00 mm beträgt.

10. Batteriezelle nach einem der vorhergehenden Ansprüche,
**dadurch gekennzeichnet,**
**dass** die negative Elektrode mindestens 0,20 mm, bevorzugt mindestens 0,30 mm, weiter bevorzugt mindestens 0,40 mm, weiter bevorzugt mindestens 0,50 mm und besonders bevorzugt mindestens 0,60 mm dick ist.

11. Batteriezelle nach einem der vorhergehenden Ansprüche,
**dadurch gekennzeichnet,**
**dass** das aktive Metall ein Alkalimetall, bevorzugt Lithium oder Natrium, ein Erdalkalimetall, bevorzugt Calcium, ein Metall der Gruppe 12 des Periodensystems, bevorzugt Zink, oder Aluminium ist.

12. Batteriezelle nach einem der vorhergehenden Ansprüche,
**dadurch gekennzeichnet,**
**dass** die negative Elektrode eine Insertionselektrode ist, die bevorzugt Kohlenstoff enthält.

13. Batteriezelle nach einem der vorhergehenden Ansprüche,
**dadurch gekennzeichnet,**
**dass** die positive Elektrode eine Metallverbindung, vorzugsweise ein Metalloxid oder ein Metallhalogenid oder ein Metallphosphat enthält, wobei das Metall vorzugsweise ein Übergangsmetall der Ordnungszahlen 22 bis 28, insbesondere Kobalt, Nickel, Mangan oder Eisen ist und wobei das Metallphosphat bevorzugt Lithiumeisenphosphat ist.

14. Batteriezelle nach einem der vorhergehenden Ansprüche,
**dadurch gekennzeichnet,**
**dass** der Elektrolyt auf SO₂ basiert, wobei bevorzugt der Elektrolyt mindestens 1,5 Mol SO₂ je Mol Leitsalz, bevorzugt mindestens 2 Mol SO₂, weiter bevorzugt mindestens 3 Mol SO₂, weiter bevorzugt mindestens 4 Mol SO₂, weiter bevorzugt mindestens 4,5 Mol SO₂, weiter bevorzugt mindestens 5 Mol SO₂ und besonders bevorzugt mindestens 6 Mol SO₂ je Mol Leitsalz enthält.

15. Batteriezelle nach einem der vorhergehenden Ansprüche,
**dadurch gekennzeichnet,**
**dass** der Elektrolyt als Leitsalz ein Halogenid, Oxalat, Borat, Phosphat, Arsenat oder Gallat des aktiven Metalls, vorzugsweise ein Lithiumtetrahalogenoaluminat, besonders bevorzugt ein Lithiumtetrachloroaluminat enthält.

## Claims

1. Rechargeable electrochemical battery cell having a housing, a positive electrode, a negative electrode, and an electrolyte which contains SO₂ and a conducting salt of the active metal of the cell,
**characterised in that**
at least one of the electrodes contains a binder B, wherein binder B consists of a polymer based on monomeric styrene and butadiene structural units.

2. Battery cell according to claim 1,
**characterised in that**
at least one of the electrodes contains a binder A, wherein binder A consists of a polymer composed of monomeric structural units of a conjugated carboxylic acid or composed of the alkali salt, alkaline earth salt or ammonium salt of that conjugated carboxylic acid, or composed of a combination thereof.

3. Battery cell according to either one of the preceding claims,
**characterised in that**
the electrode containing binder B or, when appended to claim 2, binder A or binders A and B is the negative electrode of the cell.

4. Battery cell according to any one of the preceding claims,
**characterised in that**
at least one of the electrodes contains binder B or, when appended to claim 2, binder A or a mixture of binders A and B preferably in a concentration of at most 10 % by weight, more preferably in a concentration of at most 8 % by weight, more preferably in a concentration of at most 6 % by weight, more especially preferably in a concentration of at most 4 % by weight.

5. Battery cell according to any one of the preceding claims,
**characterised in that**
at least one of the electrodes can contain further binders different from binder B or, when appended to claim 2, different from binder A.

6. Battery cell according to any one of the preceding claims,
**characterised in that**
at least one of the electrodes has a current collector element having a three-dimensional porous metal structure, especially in the form of a metal foam.

7. Battery cell according to claim 6,
**characterised in that**
the porous metal structure extends over the entire thickness of the electrode.

8. Battery cell according to either one of claims 6 and 7,
**characterised in that**
the active material is homogeneously distributed in the metal structure.

9. Battery cell according to any one of the preceding claims,
**characterised in that**
the thickness of the positive electrode is at least 0.25 mm, preferably at least 0.30 mm, more preferably at least 0.40 mm, more preferably at least 0.50 mm, more preferably at least 0.60 mm and especially preferably at least 1.00 mm.

10. Battery cell according to any one of the preceding claims,
**characterised in that**
the negative electrode is at least 0.20 mm, preferably at least 0.30 mm, more preferably at least 0.40 mm, more preferably at least 0.50 mm and especially preferably at least 0.60 mm thick.

11. Battery cell according to any one of the preceding claims,
**characterised in that**
the active metal is an alkali metal, preferably lithium or sodium, an alkaline earth metal, preferably calcium, a metal of group 12 of the Periodic Table, preferably zinc, or aluminium.

12. Battery cell according to any one of the preceding claims,
**characterised in that**
the negative electrode is an insertion electrode which preferably contains carbon.

13. Battery cell according to any one of the preceding claims,
**characterised in that**
the positive electrode contains a metal compound, preferably a metal oxide or a metal halide or a metal phosphate, wherein the metal is preferably a transition metal of atomic number 22 to 28, especially cobalt, nickel, manganese or iron, and wherein the metal phosphate is preferably lithium iron phosphate.

14. Battery cell according to any one of the preceding claims,
**characterised in that**
the electrolyte is based on SO₂, wherein preferably the electrolyte contains at least 1.5 mol SO₂ per mol conducting salt, preferably at least 2 mol SO₂, more preferably at least 3 mol SO₂, more preferably at least 4 mol SO₂, more preferably at least 4.5 mol SO₂, more preferably at least 5 mol SO₂ and especially preferably at least 6 mol SO₂ per mol conducting salt.

15. Battery cell according to any one of the preceding claims,
**characterised in that**
the electrolyte contains as conducting salt a halide, oxalate, borate, phosphate, arsenate or gallate of the active metal, preferably a lithium tetrahaloaluminate, especially preferably a lithium tetrachloro-aluminate.

## Revendications

1. Élément de batterie électrochimique rechargeable comprenant un boîtier, une électrode positive, une électrode négative et un électrolyte qui contient du SO₂ et un sel conducteur du métal actif de l'élément,
**caractérisé en ce**
**qu'**au moins l'une des électrodes contient un liant B, le liant B étant constitué d'un polymère à base d'unités structurales monomères de styrène et de butadiène.

2. Élément de batterie selon la revendication 1,
**caractérisé en ce**
**qu'**au moins l'une des électrodes contient un liant A, le liant A étant constitué d'un polymère qui est basé sur des unités structurales monomères d'un acide carboxylique conjugué ou du sel alcalin, alcalino-terreux ou d'ammonium de cet acide carboxylique conjugué ou d'une combinaison de ceux-ci.

3. Élément de batterie selon l'une des revendications précédentes,
**caractérisé en ce**
**que** l'électrode contenant le liant B ou, en référence à la revendication 2, le liant A ou les liants A et B est l'électrode négative de l'élément.

4. Élément de batterie selon l'une des revendications précédentes,
**caractérisé en ce**
**qu'**au moins l'une des électrodes contient le liant B ou, en référence à la revendication 2, le liant A ou un mélange de liant A et de liant B de préférence à une concentration d'au plus 10 % en poids, plus préférentiellement à une concentration d'au plus 8 % en poids, plus préférentiellement à une concentration d'au plus 6 % en poids et encore plus préférentiellement à une concentration d'au plus 4 % en poids.

5. Élément de batterie selon l'une des revendications précédentes,
**caractérisé en ce**
**qu'**au moins l'une des électrodes peut contenir d'autres liants différents du liant B et, en référence à la revendication 2, du liant A.

6. Élément de batterie selon l'une des revendications précédentes,
**caractérisé en ce**
**qu'**au moins l'une des électrodes présente un élément de décharge à structure métallique poreuse tridimensionnelle, en particulier sous la forme d'une mousse métallique.

7. Élément de batterie selon la revendication 6,
**caractérisé en ce**
**que** la structure métallique poreuse s'étend sur toute l'épaisseur de l'électrode.

8. Élément de batterie selon l'une des revendications 6 ou 7,
**caractérisé en ce**
**que** le matériau actif est réparti de manière homogène dans la structure métallique.

9. Élément de batterie selon l'une des revendications précédentes,
**caractérisé en ce**
**que** l'épaisseur de l'électrode positive est d'au moins 0,25 mm, de préférence d'au moins 0,30 mm, plus préférentiellement d'au moins 0,40 mm, plus préférentiellement d'au moins 0,50 mm, plus préférentiellement d'au moins 0,60 mm et de manière particulièrement préférée d'au moins 1,00 mm.

10. Élément de batterie selon l'une des revendications précédentes,
**caractérisé en ce**
**que** l'électrode négative a une épaisseur d'au moins 0,20 mm, de préférence d'au moins 0,30 mm, plus préférentiellement d'au moins 0,40 mm, plus préférentiellement d'au moins 0,50 mm et de manière particulièrement préférée d'au moins 0,60 mm.

11. Élément de batterie selon l'une des revendications précédentes,
**caractérisé en ce**
**que** le métal actif est un métal alcalin, de préférence du lithium ou du sodium, un métal alcalino-terreux, de préférence du calcium, un métal du groupe 12 du tableau périodique, de préférence du zinc ou de l'aluminium.

12. Élément de batterie selon l'une des revendications précédentes,
**caractérisé en ce**
**que** l'électrode négative est une électrode d'insertion qui contient de préférence du carbone.

13. Élément de batterie selon l'une des revendications précédentes,
**caractérisé en ce**
**que** l'électrode positive contient un composé métallique, de préférence un oxyde métallique ou un halogénure métallique ou un phosphate métallique, le métal étant de préférence un métal de transition de numéros atomiques 22 à 28, en particulier du cobalt, du nickel, du manganèse ou du fer et le phosphate métallique étant de préférence du phosphate de lithium et de fer.

14. Élément de batterie selon l'une des revendications précédentes,
**caractérisé en ce**
**que** l'électrolyte est à base de SO₂, l'électrolyte contenant de préférence au moins 1,5 mole de SO₂ par mole de sel conducteur, de préférence au moins 2 moles de SO₂, plus préférentiellement au moins 3 moles de SO₂, plus préférentiellement au moins 4 moles de SO₂, plus préférentiellement au moins 4,5 moles de SO₂, plus préférentiellement au moins 5 moles de SO₂ et de manière particulièrement préférée au moins 6 moles de SO₂ par mole de sel conducteur.

15. Élément de batterie selon l'une des revendications précédentes,
**caractérisé en ce**
**que** l'électrolyte contient, en tant que sel conducteur, un halogénure, un oxalate, un borate, un phosphate, un arséniate ou un gallate du métal actif, de préférence du tétrahalogénoaluminate de lithium, de manière particulièrement préférée du tétrachloroaluminate de lithium.
